# EUROPEAN PATENT APPLICATION

(11) **EP 3 174 281 A1**
(43) Date of publication of application: **31.05.2017**
(21) Application number: 15824858.3
(22) Date of filing: 04.06.2015
(51) Int. Cl.: H04N 5/225, H04N 5/91

(54) **DISPLAY CONTROL DEVICE, IMAGE CAPTURING APPARATUS AND DISPLAY CONTROL METHOD**

(30) Priority: 23.07.2014 JP 2014149785
(71) Applicant: Sony Corporation, Tokyo 108-0075 (JP)
(72) Inventor: NAITO, Masaki, Tokyo 108-0075 (JP)
(74) Representative: D Young & Co LLP
(86) International application number: PCT/JP2015/066269
(87) International publication number: WO 2016/013309

(57) **Abstract**

[Object] To further improve the convenience of the user

[Solution] Provided is a display control apparatus including: a display control unit configured to delay a captured video for a predetermined time, and display the delayed video. The predetermined time for which the video is delayed is determined on the basis of a timing at which recording is started according to a trigger signal.

## Description

### Technical Field

The present disclosure relates to display control apparatuses, imaging apparatuses, and display control methods.

### Background Art

Among imaging apparatuses which can capture a moving image (video), such as a digital video camera and the like, there are some that can switch between a plurality of recording modes, depending on a relationship between the input timing of a trigger signal corresponding to a trigger operation, such as pressing down of a record button or the like, and a period of time during which a video is recorded. The recording modes include, for example, a recording mode corresponding to so-called "start trigger" in which a video during a predetermined period of time following the input timing of a trigger signal is recorded, and a recording mode corresponding to so-called "end trigger" in which a video during a predetermined period of time preceding the input timing of a trigger signal is recorded. For example, Patent Literature 1 discloses a technique of displaying a selected recording mode, as an icon which can be easily intuitively recognized by the user, on a display of an imaging apparatus.

### Citation List

### Patent Literature

Patent Literature 1: JP 2007-180740A

### Disclosure of Invention

### Technical Problem

Here, a user who is using an imaging apparatus typically performs a trigger operation, depending on a period of time during which recording is desired, while viewing a so-called live view image showing a current state of an object. Therefore, in a recording mode in which a preceding video is recorded, such as the above recording mode corresponding to end trigger, the user cannot perform a trigger operation while directly viewing a video which is at the start of recording. Therefore, unless the user checks a recorded video after the end of recording, the user cannot verify whether or not a desired video has been recorded, and therefore, the user may feel inconvenient.

With the above in mind, the present disclosure proposes a novel and improved display control apparatus, imaging apparatus, and display control method which can further improve the convenience of the user.

### Solution to Problem

According to the present disclosure, there is provided a display control apparatus including: a display control unit configured to delay a captured video for a predetermined time, and display the delayed video. The predetermined time for which the video is delayed is determined on the basis of a timing at which recording is started according to a trigger signal.

According to the present disclosure, there is provided an imaging apparatus including: an imaging unit configured to capture a video; a storage unit configured to store a video with a certain period of time captured by the imaging unit; and a display control unit configured to delay the video captured by the imaging unit for a predetermined time, and display the delayed video, using the video stored in the storage unit. The predetermined period of time for which the video is delayed is determined on the basis of a timing at which recording is started according to a trigger signal.

According to the present disclosure, there is provided a display control method including: causing a processor to delay a captured video for a predetermined time, and display the delayed video. The predetermined time for which the video is delayed is determined on the basis of a timing at which recording is started according to a trigger signal.

According to the present disclosure, a captured video which is delayed for a predetermined time is displayed. Therefore, when a video preceding the user's trigger operation is recorded, the user can perform a trigger operation at a more appropriate timing while checking a delayed video. As a result, the convenience of the user is further improved.

### Advantageous Effects of Invention

As described above, according to the present disclosure, the convenience of the user can be further improved. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an illustrative diagram for describing recording modes used in an imaging apparatus according to this embodiment.
[FIG. 2] FIG. 2 is a functional block diagram showing a functional configuration example of an imaging apparatus according to this embodiment.
[FIG. 3] FIG. 3 is an illustrative diagram for describing a process of a captured video recording unit in a first recording mode.
[FIG. 4] FIG. 4 is a diagram showing a display example in a commonly used imaging apparatus at a shooting start timing shown in FIG. 3.
[FIG. 5] FIG. 5 is a diagram showing a display example in a commonly used imaging apparatus at a recording start timing shown in FIG. 3.
[FIG. 6] FIG. 6 is a diagram showing a display example in a commonly used imaging apparatus at a trigger signal input timing shown in FIG. 3.
[FIG. 7] FIG. 7 is a diagram showing a display example in an imaging apparatus according to this embodiment at a shooting start timing shown in FIG. 3.
[FIG. 8] FIG. 8 is a diagram showing a display example in an imaging apparatus according to this embodiment at a recording start timing shown in FIG. 3.
[FIG. 9] FIG. 9 is a diagram showing a display example in an imaging apparatus according to this embodiment at a trigger signal input timing shown in FIG. 3.
[FIG. 10] FIG. 10 is a flowchart showing an example of a procedure for a display control method according to this embodiment.
[FIG. 11] FIG. 11 is an illustrative diagram for describing a display example according to this embodiment.
[FIG. 12] FIG. 12 is an illustrative diagram for describing a variation in which a plurality of display devices are provided.
[FIG. 13] FIG. 13 is an illustrative diagram for describing a variation in which only a video which is delayed for predetermined time is displayed.
[FIG. 14] FIG. 14 is an illustrative diagram for describing a variation in which a live view image and a video which is delayed for a predetermined time are superimposed and displayed together.
[FIG. 15] FIG. 15 is a block diagram showing a hardware configuration example of an imaging apparatus according to this embodiment.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. Recording modes
2. Apparatus configuration
3. Display examples
3-1. Commonly used display examples
3-2. Display examples according to this embodiment
4. Display control method
5. Variations of display examples
5-1. Variation in which plurality of display devices are provided
5-2. Variation in which only video delayed for predetermined time is displayed
5-3. Variation in which live view image and video delayed for predetermined time are superimposed and displayed together
6. Hardware configuration
7. Supplement

### (1. Recording modes)

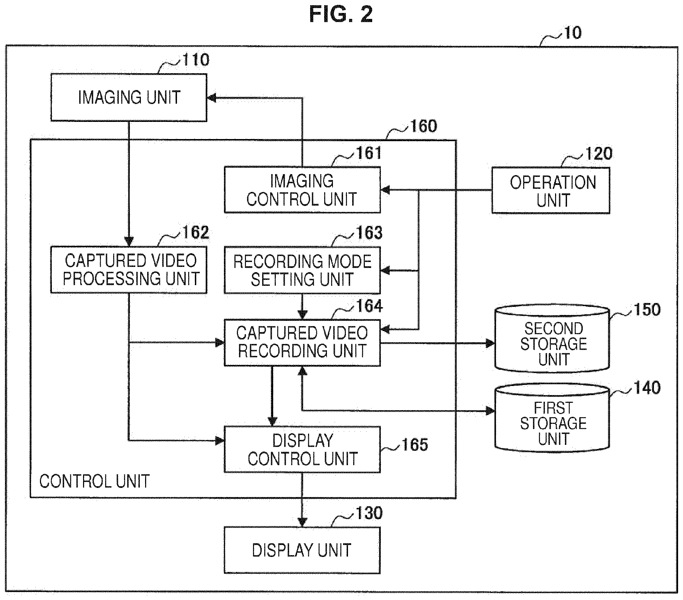

An imaging apparatus according to this embodiment (corresponding to an imaging apparatus 10 shown in FIG. 2 described below) is an imaging apparatus which can capture a moving image (video), such as a digital video camera or the like. In the imaging apparatus, a video with a certain period of time is recorded in a first recording medium (a first storage unit 140 shown in FIG. 2 described below) which can temporarily record information, such as a memory or the like. A video corresponding to a predetermined period of time, of the video recorded in the first recording medium, is recorded into a second recording medium (corresponding to a second storage unit 150 shown in FIG. 2 described below) which is different from the first recording medium, according to the user's trigger operation, such as pressing down of a record button or the like. A video which is recorded in the second recording medium is a video which the user desires to finally obtain, i.e., a video which is intended to be finally recorded. For example, when shooting is performed at a high frame rate, such as high-speed shooting, it is difficult to continue to record a video over a long period of time, i.e., to perform continuous shooting over a long period of time, because of the amount of information. Therefore, as described above, a process of re-recording a video corresponding to a desired period of time, of a video with a certain period of time (e.g., about several (sec)) which is temporarily recorded, is preferably performed.

Note that, although it is data (video information) corresponding to a video that is actually recorded in the first recording medium and the second recording medium, "record (save) video information" may also be herein referred to "record (save) a video" or the like for the sake of simplicity. Also, in the description that follows, "record a video into the first recording medium" is referred to as "capture a video (image)" or "shoot a video (image)," and "record a video into the second recording medium" is referred to as "record," as distinct from each other, for the sake of convenience. In other words, in this embodiment, a portion of a captured video is recorded as a video which is intended to be finally recorded.

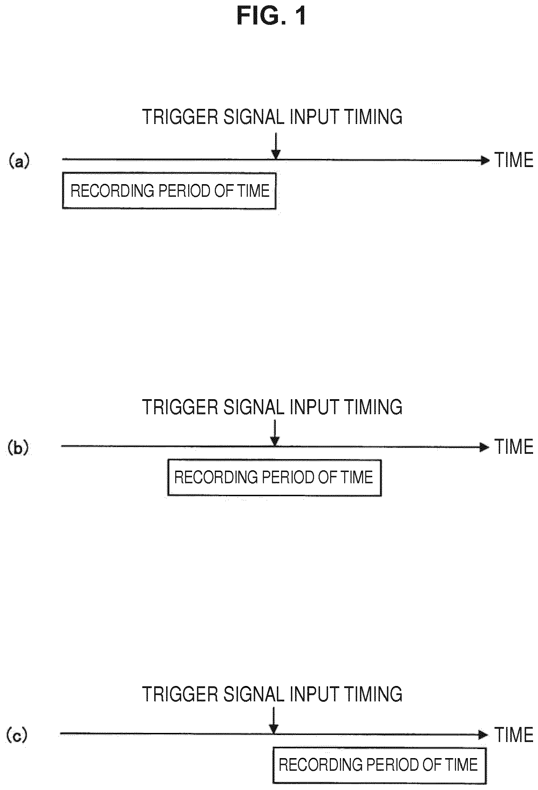

Here, the imaging apparatus according to this embodiment has a plurality of recording modes, depending on a relationship between the input timing of a trigger signal corresponding to a trigger operation which is performed by the user to start recording (also hereinafter simply referred to as a "trigger operation") and a period of time during which a video is recorded. The recording modes used in the imaging apparatus according to this embodiment will be described with reference to FIG. 1. FIG. 1 is an illustrative diagram for describing the recording modes used in the imaging apparatus according to this embodiment. FIG. 1 illustrates time at which a video is being recorded, as a horizontal axis, and schematically illustrates a relationship between the input timing of a trigger signal and a recording period of time during which a video is recorded.

A recording mode shown in FIG. 1(a) (also hereinafter referred to as a "first recording mode") is a recording mode in which a video during a predetermined period of time preceding the input timing of a trigger signal is recorded. The first recording mode corresponds to so-called "end trigger."

A recording mode shown in FIG. 1(b) (also hereinafter referred to as a "second recording mode") is a recording mode in which a video during a predetermined period of time in the middle of which the input timing of a trigger signal is present. In the second recording mode, a recording period of time includes a predetermined period of time preceding the input timing of a trigger signal and a predetermined period of time following the input timing of the trigger signal. The second recording mode corresponds to so-called "center trigger."

Note that, in the description that follows, a predetermined period of time preceding the input timing of a trigger signal in the first recording mode and the second recording mode is also referred to as a "preceding period of time." In other words, a preceding period of time refers to a period of time from a timing at which a recording period of time starts (recording start timing) to the input timing of a trigger signal. The first recording mode and the second recording mode are both a recording mode in which a recording period of time includes a preceding period of time. Also, the first recording mode is a recording mode in which a preceding period of time is the same as a recording period of time.

A shooting mode shown in FIG. 1(c) (also hereinafter referred to as a "third recording mode") is a shooting mode in which a video during a predetermined period of time following the input timing of a trigger signal is recorded. The third recording mode corresponds to so-called "start trigger." In the third recording mode, a recording period of time does not include a preceding period of time, and a predetermined period of time following the input timing of a trigger signal is the same as a recording period of time.

In the foregoing, the recording modes used in the imaging apparatus according to this embodiment have been described with reference to FIG. 1. In the imaging apparatus according to this embodiment, one of the first recording mode to the third recording mode is set according to, for example, the user's selection operation. The user can obtain a video which is during a desired period of time by performing a trigger operation at a timing corresponding to the set recording mode while viewing a video displayed on a display device, such as a display or the like. In this embodiment, in order to improve the convenience of the user, display control is performed according to the recording mode in the display device.

Note that, in this embodiment, when the recording mode is the first recording mode or the second recording mode, the effect of improving the convenience of the user is particularly exhibited. Therefore, in the description that follows, a case where the recording mode is the first recording mode or the second recording mode will be mainly described.

### (2. Apparatus configuration)

A functional configuration of the imaging apparatus according to this embodiment will be described with reference to FIG. 2. FIG. 2 is a functional block diagram showing a functional configuration example of the imaging apparatus according to this embodiment.

Referring to FIG. 2, the imaging apparatus 10 according to this embodiment includes, as its functions, an imaging unit 110, an operation unit 120, a display unit 130, a first storage unit 140, a second storage unit 150, and a control unit 160. Note that FIG. 2 mainly shows only characteristic functions of this embodiment, and functions which may be provided in commonly used imaging apparatuses (e.g., a digital video camera) are not shown. The imaging apparatus 10 may further include such functions which may be provided in commonly used imaging apparatuses and are not shown.

The imaging unit 110 includes an imaging element, such as a charge coupled device (CCD) image sensor, complementary metal-oxide-semiconductor (CMOS) image sensor, or the like, and optical members which control incident light to the imaging element, such as a lens, diaphragm, shutter, and the like. The imaging unit 110 images an object, and acquires an image signal (image information) corresponding to the captured image. Operations of the imaging unit 110, such as driving of the imaging element or the optical members according to shooting conditions, are performed by an imaging control unit 161 described below of the control unit 160. In this embodiment, the imaging unit 110 can acquire image information corresponding to a moving image (video) by continuously shooting an object at a predetermined frame rate. The frame rate may have a value corresponding to so-called high-speed shooting. The imaging unit 110 provides image information corresponding to an acquired video to a captured video processing unit 162 described below of the control unit 160.

Note that the imaging apparatus 10 may include an audio input unit (not shown) together with the imaging unit 110. The audio input unit includes a sound collection device which can acquire surrounding sounds, such as a microphone or the like, and can acquire audio information depending on image information corresponding to a video acquired by the imaging unit 110.

The operation unit 120 is an input interface for detecting various operation inputs made by the user. The operation unit 120 includes various input devices, such as various buttons, such as a recording start button, cross button, menu button, and the like, a touchscreen, a remote controller, and the like. Note that the configuration of the operation unit 120 is not limited to this example, and the operation unit 120 may include various known input devices which can be included in commonly used digital video cameras. Also, the operation unit 120 includes an input control circuit which generates an input signal based on the user's operation and provides the input signal to the control unit 160.

The user can input various kinds of information or instructions to the imaging apparatus 10 through the operation unit 120. In this embodiment, the user can input an instruction to set a recording mode to a recording mode setting unit 163 described below of the control unit 160 through the operation unit 120. Also, the user can input an instruction to start shooting to the imaging control unit 161 described below of the control unit 160 through the operation unit 120. Also, the user can input an instruction (i.e., a trigger signal) to start recording to a captured video recording unit 164 described below of the control unit 160 by performing a trigger operation through the operation unit 120 (e.g., the above recording start button).

The display unit 130 is an output interface which displays various kinds of information in various forms, such as text, an image, a figure, a graph, or the like, on a display screen to visually notify the user of the information. The display unit 130 includes various display devices, such as a liquid crystal display (LCD), organic electro-luminescence (EL) display, and the like. In this embodiment, the display unit 130 displays a video which is delayed for a predetermined time, under the control of a display control unit 165 described below of the control unit 160. A predetermined period of time for which a video is delayed may be a period of time corresponding to a preceding period of time in a recording mode which is set. As a result, a video of which display is delayed is the same as a video at a recording start timing. Also, the display unit 130 may display a video showing a current object (so-called live view image) together with a video which is delayed for a predetermined time. Note that the function of the display unit 130 is not limited to this example, and the display unit 130 can display various kinds of information which may be displayed by commonly used imaging apparatuses, such as a setting screen for setting shooting conditions, a recorded video, and the like.

Note that the imaging apparatus 10 may include an audio output unit (not shown) together with the display unit 130. The audio output unit includes an audio output device, such as a loudspeaker or the like, and can output audio corresponding to a video displayed on the display unit 130.

The first storage unit 140 includes a recording medium which can temporarily record information, such as a memory or the like, and stores a video with a certain period of time during shooting. In other words, the first storage unit 140 buffers a captured video. During shooting, a video corresponding to a recording start timing corresponding to the recording mode is read from the first storage unit 140, and is provided to the display control unit 165. Also, a video corresponding to a recording period of time is read from the first storage unit 140 according to an operation input indicating start of recording, and is stored into the second storage unit 150. The processes of storing and reading a video to and from the first storage unit 140 are controlled by the captured video recording unit 164 described below of the control unit 160.

A video saved in the first storage unit 140 is updated as appropriate during the time that shooting is continued so that videos are erased in chronological order with the oldest first. The storage capacity of the first storage unit 140 is set so that at least a video corresponding to a recording period of time can be stored. Preferably, the storage capacity of the first storage unit 140 is designed to be equal to the amount of information of a video corresponding to a preceding period of time (a recording period of time in the first recording mode). When the storage capacity of the first storage unit 140 is equal to the amount of information of a video corresponding to a preceding period of time, a video immediately before being erased in the first storage unit 140 corresponds to a video at a recording start timing in the first and second recording modes.

The second storage unit 150 includes various storage devices, such as a magnetic storage device, semiconductor storage device, optical storage device, magneto-optical storage device, and the like, and stores a video corresponding to a recording period of time, i.e., a video which is intended to be finally recorded. The video storage process performed in the second storage unit 150 is controlled by the captured video recording unit 164 described below of the control unit 160. The storage capacity of the second storage unit 150 is set into sufficiently large, compared to the first storage unit 140. For example, the second storage unit 150 can store a plurality of different videos. Note that the second storage unit 150 may include a removable recording medium, such as an optical disc, magneto-optical disc, semiconductor memory, or the like.

Note that the imaging apparatus 10 may further include a storage unit for storing, for example, various kinds of information other than video information processed by the control unit 160, a program for operating the control unit 160, and the like, in addition to the first storage unit 140 and the second storage unit 150. Alternatively, the second storage unit 150 may further store these kinds of information in addition to video information.

The control unit 160 includes various processors, such as a central processing unit (CPU), digital signal processor (DSP), and the like, and performs various calculation processes to control operations of the imaging apparatus 10. The control unit 160 may correspond to a display control apparatus of the present disclosure. As shown, the control unit 160 has, as its functions, the imaging control unit 161, the captured video processing unit 162, the recording mode setting unit 163, the captured video recording unit 164, and the display control unit 165. Note that functions of the control unit 160 including these functions are achieved by a processor included in the control unit 160 operating according to a predetermined program stored in, for example, the second storage unit 150 or other storage devices or the like.

The imaging control unit 161 controls operations of the imaging unit 110. For example, the imaging control unit 161 drives the imaging element and optical members provided in the imaging unit 110, according to preset shooting conditions (e.g., exposure, shutter speed, etc.). The imaging control unit 161 drives the imaging apparatus and the optical member to start shooting, according to a signal indicating start of shooting which is input through the operation unit 120. When shooting is thus started by the imaging unit 110 under the control of the imaging control unit 161, image information corresponding to a video is provided from the imaging unit 110 to the captured video processing unit 162.

The captured video processing unit 162 performs various signal processes on image information acquired by the imaging unit 110 to generate video information corresponding to a video which is shot (captured video). The signal processes performed by the captured video processing unit 162 include, for example, gamma correction, auto gain control (AGC), adjustment of white balance, exposure correction, magnification control corresponding to digital zooming, and the like, which are performed to process image information in commonly used imaging apparatuses. The image information after the signal processes is, for example, information (video information) corresponding to a video which is displayed on the display unit 130 and may be finally visually recognized by the user. The captured video processing unit 162 provides the image information after the processes, i.e., video information, to the captured video recording unit 164 and the display control unit 165.

The recording mode setting unit 163 sets the recording mode of the imaging apparatus 10. The recording mode of the imaging apparatus 10 may be selected from, for example, the first recording mode to the third recording mode described above (1. Recording modes). The recording mode setting unit 163 can determine the recording mode of the imaging apparatus 10 according to the user's instruction input through the operation unit 120. The recording mode setting unit 163 provides information about the set recording mode to the captured video recording unit 164.

The captured video recording unit 164 records video information corresponding to a captured image. The captured video recording unit 164 saves video information generated by the captured video processing unit 162 into the first storage unit 140. Here, as described above, the storage capacity of the first storage unit 140 is designed to be capable of storing a video with a certain period of time. Also, when shooting is being continued, the captured video processing unit 162 may sequentially generate video information. Therefore, the captured video recording unit 164 erases videos stored in the first storage unit 140 in chronological order with the oldest first, i.e., performs a sequential updating process. As a result, the first storage unit 140 invariably stores a video which precedes the current time by a predetermined period of time (a period of time corresponding to the storage capacity of the first storage unit 140) while updating the video.

Also, the captured video recording unit 164 determines a recording period of time on the basis of information about the set recording mode during shooting. For example, when the recording mode is the first recording mode, a predetermined period of time preceding the current time is a recording period of time. Also, for example, when the recording mode is the second recording mode, a combination of a predetermined period of time preceding the current time and a predetermined period of time following the current time is a recording period of time. Also, for example, when the recording mode is the third recording mode, a predetermined period of time following the current time is a recording period of time. The captured video recording unit 164 reads a video corresponding to a recording start timing corresponding to the recording mode from the first storage unit 140, on the basis of the determined recording period of time, and provides the video to the display control unit 165. Also, the captured video recording unit 164 reads a video which is during a recording period of time corresponding to the set recording mode, from the first storage unit 140, saves the video into the second storage unit 150, according to a signal indicating start of recording (i.e., a trigger signal) which is input through the operation unit 120.

Note that the captured video recording unit 164 may have the function of performing an encoding process, and may encode video information using a predetermined technique (e.g., MPEG2, etc.), and store the encoded video information into the first storage unit 140 and the second storage unit 150. The encoding technique is not limited to this example, and various known techniques may be employed.

Processes of the captured video recording unit 164 corresponding to the recording modes will now be described in sequence.

Firstly, a case where the recording mode is the first recording mode will be described. In the first recording mode, a recording period of time is the same as a preceding period of time (see FIG. 1(a)). Meanwhile, as described above, a video during a period of time corresponding to at least a preceding period of time is saved in the first storage unit 140. Therefore, in the first recording mode, the captured video recording unit 164 reads a video corresponding to the start timing of a preceding period of time (i.e., a recording start timing), of a video stored in the first storage unit 140, and provides the video to the display control unit 165. As a result, a video corresponding to a recording start timing in the first recording mode is displayed on the display unit 130 by the display control unit 165. Also, the captured video recording unit 164 reads a video corresponding to a preceding period of time, of a video stored in the first storage unit 140, and saves the video into the second storage unit 150. As a result, a video corresponding to a recording period of time in the first recording mode is stored in the second storage unit 150.

Next, a case where the recording mode is the second recording mode will be described. In the second recording mode, a recording period of time includes a preceding period of time and a predetermined period of time following the input timing of a trigger signal (see FIG. 1(b)). Therefore, in the second recording mode, the captured video recording unit 164 reads a video corresponding to the start timing of a preceding period of time (i.e., a recording start timing), of a video stored in the first storage unit 140, and provides the video to the display control unit 165. As a result, a video corresponding to a recording start timing in the second recording mode is displayed on the display unit 130 by the display control unit 165. Also, the captured video recording unit 164 reads video information corresponding to a preceding period of time, of video information stored in the first storage unit 140, and saves the video information into the second storage unit 150, and in addition, saves current video information with a predetermined period of time following the input timing of a trigger signal, which is sequentially provided from the captured video processing unit 162, into the second storage unit 150. As a result, a video corresponding to a recording period of time in the second recording mode is stored in the second storage unit 150.

Next, a case where the recording mode is the third recording mode will be described. In the third recording mode, a recording period of time does not include a preceding period of time (see FIG. 1(c)). Therefore, in the third recording mode, the captured video recording unit 164 provides current video information sequentially provided from the captured video processing unit 162 to the display control unit 165 without reading a video stored in the first storage unit 140. As a result, a video corresponding to a recording start timing in the third recording mode (i.e., a live view image) is displayed on the display unit 130 by the display control unit 165. Also, the captured video recording unit 164 stores current video information with a recording period of time, which is sequentially provided from the captured video processing unit 162, into the second storage unit 150. As a result, a video corresponding to a recording period of time in the third recording mode is stored in the second storage unit 150.

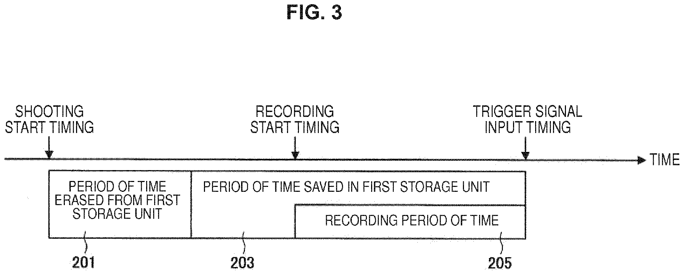

Here, a process of the captured video recording unit 164 in the first recording mode will be described in greater detail with reference to FIG. 3. FIG. 3 is an illustrative diagram for describing the process of the captured video recording unit 164 in the first recording mode. FIG. 3 illustrates time at which a video is being captured, as a horizontal axis, and schematically illustrates a relationship between a storage period of time (saving period of time) of a video stored in the first storage unit 140 and a recording period of a video.

Referring to FIG. 3, the captured video recording unit 164 starts saving a video into the first storage unit 140 from a timing (shooting start timing) at which an instruction to start shooting is input through the operation unit 120. In the first storage unit 140, only a video during a period of time corresponding to the storage capacity is stored, and videos are erased in chronological order with the oldest first. In FIG. 3, a period of time 201 represents the period of time of a video erased from the first storage unit 140. In FIG. 3, a period of time 203 represents the period of time of a video saved in the first storage unit 140.

When shooting is started, the captured video recording unit 164 reads a video corresponding to a timing at which a recording period of time starts (in FIG. 3, a recording start timing) from the first storage unit 140, and provides the video to the display control unit 165. Also, when a trigger operation is performed through the operation unit 120, the captured video recording unit 164 performs a process of moving a video which is during a recording period of time 205 which precedes, by a predetermined period of time, the input timing of a trigger signal corresponding to the trigger operation, from the first storage unit 140 to the second storage unit 150. The storage capacity of the first storage unit 140 is designed so that the period of time 203 is longer than the recording period of time 205, and therefore, the captured video recording unit 164 can save a portion of a video included in the period of time 203, as a video corresponding to the recording period of time 205, into the second storage unit 150. Note that when the storage capacity of the first storage unit 140 is designed so that the period of time 203 is the same as the recording period of time 205, the captured video recording unit 164 may save an entire video stored in the first storage unit 140, as a video corresponding to the recording period of time 205, into the second storage unit 150.

In the foregoing, the process of the captured video recording unit 164 in the first recording mode has been described in greater detail with reference to FIG. 3. Note that although, here, the process of the captured video recording unit 164 in the first recording mode has been described as an example, in the second recording mode a video corresponding to a recording start timing and a video corresponding to preceding period of time are similarly processed. Specifically, in the second recording mode, the captured video recording unit 164 can read a video corresponding to a recording start timing, and provide the video to the display control unit 165, and in addition, can save a portion of a video included in the period of time 203, as a video corresponding to a preceding period of time, into the second storage unit 150. Also, in the third recording mode, a recording period of time does not include a preceding period of time, and therefore, the captured video recording unit 164 may not perform the process of reading a video stored in the first storage unit 140.

The display control unit 165 controls driving of the display unit 130 so that various kinds of information are displayed on the display unit 130. In this embodiment, when the recording mode is set to the first recording mode or the second recording mode, the display control unit 165 drives the display unit 130 to display a video which is delayed for a predetermined time. In other words, the display control unit 165 has a function of delaying a live view image for a predetermined time and displaying the delayed image. The display control unit 165 can display a delayed video by using a video temporarily stored in the first storage unit 140 (i.e., a buffered video). Here, a time for which the display of a video is delayed may be a time corresponding to a preceding period of time in the set first recording mode or second recording mode. Thus, the display control unit 165 can drive the display unit 130 to display a video which is at a recording start timing corresponding to the recording mode.

Here, in a commonly used existing imaging apparatus, the user performs a trigger operation while viewing a current video (so-called live view image). Therefore, when the recording mode is the first recording mode or the second recording mode, i.e., a video preceding the timing of a trigger operation is recorded, it is necessary for the user to perform a trigger operation on the basis of a prediction of a video at the start of recording, which is made while viewing a live view image which is a video different from the video at the start of recording, and taking a preceding period of time into account. Therefore, a certain skill is necessary for starting recording from a desired timing. Also, unless a recorded video is subsequently checked, it cannot be verified whether or not a video has been recorded from a desired timing, which is inconvenient. Meanwhile, in this embodiment, as described above, the display control unit 165 displays, on the display unit 130, a video which is delayed for a predetermined time, such as a video at a recording start timing. Therefore, the user can perform a trigger operation while checking a video which is at a recording start timing, which is displayed on the display unit 130, and thereby more easily record a desired video.

Note that the display control unit 165 may drive the display unit 130 to display a live view image together with a video which is delayed for a predetermined time. The display control unit 165 can drive the display unit 130 to display a live view image, by acquiring video information indicating a current state of an object from the captured video processing unit 162. When the user determines when to perform a trigger operation, i.e., during what period of time a video is to be recorded, a current condition of an object may also be a criterion. Therefore, if a live view image is displayed together with a video which is delayed for a predetermined time on the display unit 130, the user can perform a trigger operation at a more appropriate timing while viewing both of the videos. In particular, when the recording mode is the first recording mode, a video which is delayed for a predetermined time corresponds to a video at a recording start timing, and a live view image corresponds to a video at a timing at which a recording period of time ends. Therefore, if a live view image is displayed together with a video which is delayed for a predetermined time on the display unit 130, the user can perform a trigger operation while checking both a video at the start timing of a recording period of time and a video at the end timing of the recording period of time, resulting in a further improvement in the convenience of the user.

Here, when the recording mode is the third recording mode, the display control unit 165 may drive the display unit 130 to display only a live view image without displaying a video which is delayed for a predetermined time. This is because, in the third recording mode, the timing of a trigger operation is a recording start timing, and a video displayed as a live view image is a video at the recording start timing. Thus, in this embodiment, it can be said that the display control unit 165 has the function of driving the display unit 130 to display a video which is at a recording start timing, depending on the recording mode.

Note that the function of the display control unit 165 is not limited to the above example. The display control unit 165 can drive the display unit 130 to display various kinds of information which may be displayed on commonly used digital video cameras, such as a setting screen for setting shooting conditions, a recorded video, and the like. For example, the display control unit 165 can drive the display unit 130 to display a recorded video, by reading recorded video information from the second storage unit 150.

In the foregoing, the functional configuration of the imaging apparatus 10 according to this embodiment has been described with reference to FIG. 2. Note that although, in the foregoing, a case has been described in which the display control unit 165 drives the display unit 130 to display a video which is at a recording start timing as a video which is delayed for a predetermined time, this embodiment is not limited to this example. For example, the display control unit 165 may drive the display unit 130 to display a video which is at a predetermined timing before a recording start timing, as a video which is delayed for a predetermined time. As described above, the user can perform a trigger operation while viewing a video which is delayed for a predetermined time. Actually, there may be a delay between when the user checks a video and when the user then actually performs a trigger operation (e.g., pressing down of a recording start button), due to the physiological nature of humans. In this embodiment, such a delay may be taken into account, and a video at a timing slightly earlier than a recording start timing may be displayed on the display unit 130. As a result, the timing of the user's trigger operation more exactly coincides with a recording start timing in terms of the user's intuition.

Also, the configuration shown in FIG. 2 may be an integrated configuration as a single apparatus, or alternatively, a configuration in which a plurality of devices are connected together so that they can communication with each other through a network. For example, the display unit 130 may not necessarily be integrally provided with the imaging apparatus 10, or alternatively, may be configured as a separate display device different from the imaging apparatus 10. Also, for example, each function of the control unit 160 may be performed by a single processor or a single information processing device, or by a plurality of processors or a plurality of information processing device in cooperation with each other. Alternatively, each function of the control unit 160 may be performed by an information processing device or information processing devices, such as a server or the like, provided on a network (e.g., on a so-called cloud). In this case, for example, the imaging unit 110, the operation unit 120, and the display unit 130 are configured as an imaging apparatus which is directly operated by the user. The imaging apparatus may communicate various kinds of information, instructions, and the like with an information processing device which is located elsewhere and can carry out the functions of the first storage unit 140, the second storage unit 150, and the control unit 160, through a network, whereby the functions shown in FIG. 2 are achieved.

Also, a computer program for implementing each of the above functions of the imaging apparatus 10 according to this embodiment, particularly each function of the control unit 160, can be created and installed in a personal computer (PC) or the like. Also, a computer-readable recording medium storing such a computer program can also be provided. Examples of the recording medium include a magnetic disk, optical disc, magneto-optical disc, flash memory, and the like. Also, the above computer program may be distributed through, for example, a network without using a recording medium.

### (3. Display examples)

Next, a display example in this embodiment carried out by the display control unit 165 will be described in greater detail. Here, for comparison, a commonly used display example and a display example according to this embodiment will both be described. Also, as an example, a display example in a case where the recording mode is the first recording mode will be described.

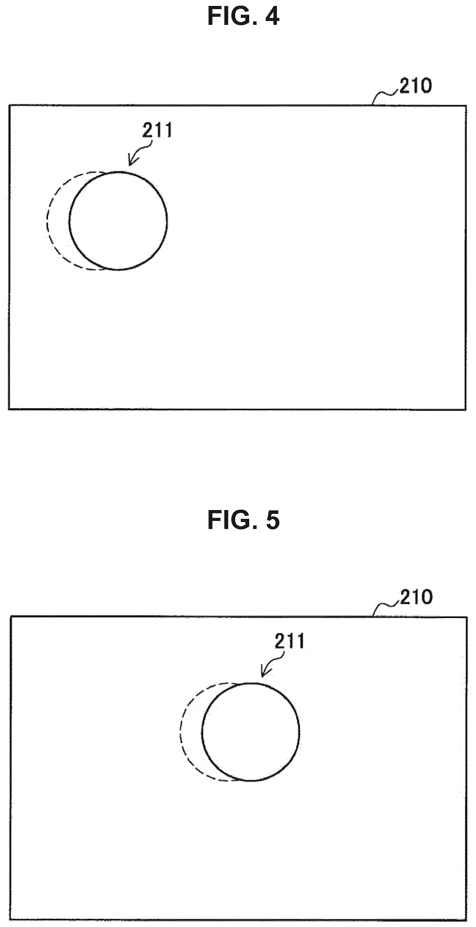

Also, in FIG. 4 to FIG. 9 described below, as an example of display of a video, display examples at the shooting start timing, recording start timing, and trigger signal input timing shown in FIG. 3 are shown. Here, it is assumed that, at the shooting start timing shown in FIG. 3, shooting has been just started, and a video has not yet been recorded in the first storage unit 140. Also, it is assumed that, at the recording start timing shown in FIG. 3, neither a time corresponding to a recording period of time (i.e., a preceding period of time) in the first recording mode nor a time corresponding to a period of time corresponding to the storage capacity of the first storage unit 140 has elapsed, and a video has not been erased and is still stored in the first storage unit 140. Also, it is assumed that, at the trigger signal input timing shown in FIG. 3, at least a period of time corresponding to the storage capacity of the first storage unit 140 has elapsed since the start of shooting, and videos are erased in chronological order with the oldest first in the first storage unit 140, which is thus updated.

### (3-1. Commonly used display examples)

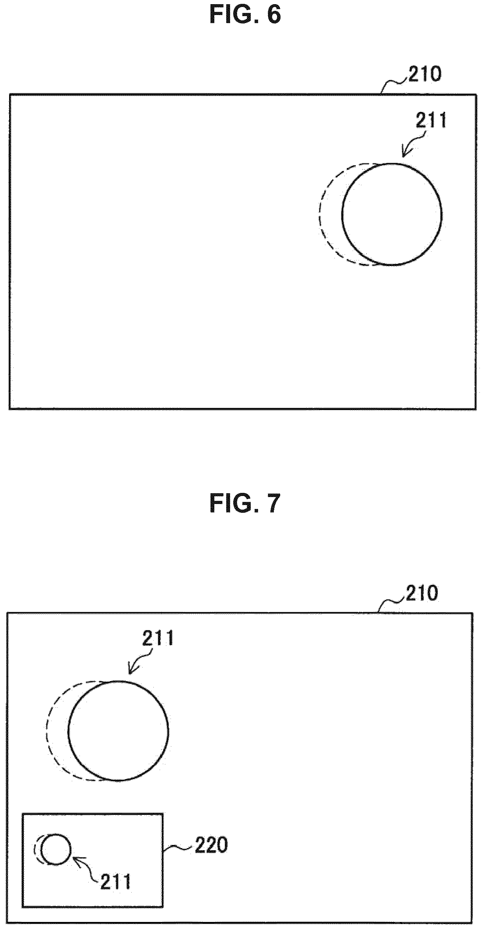

Firstly, display examples in a commonly used imaging apparatus will be described with reference to FIG. 4 to FIG. 6. FIG. 4 is a diagram showing a display example in a commonly used imaging apparatus at the shooting start timing shown in FIG. 3. FIG. 5 is a diagram showing a display example in a commonly used imaging apparatus at the recording start timing shown in FIG. 3. FIG. 6 is a diagram showing a display example in a commonly used imaging apparatus at the trigger signal input timing shown in FIG. 3.

FIG. 4 to FIG. 6 show displays of a display screen 210 which are provided when a video of an object 211 moving from left to right is shot. In a commonly used imaging apparatus, a live view image may be displayed on the display screen 210 irrespective of the recording mode. Therefore, as shown in FIG. 4 to FIG. 6, the display screen 210 directly shows a state of the object 211 moving from left to right.

The user, when recording a video, performs a trigger operation while viewing the display screen 210. In the examples shown in FIG. 4 to FIG. 6, the user performs a trigger operation at a timing at which the display of FIG. 6 is performed on the display screen 210 so that a video following the display of FIG. 5 is recorded as a video which the user desires to finally obtain. Thus, in a commonly used imaging apparatus, the user has to perform a trigger operation while viewing the display screen 210 shown in FIG. 6 after a predetermined period of time has elapsed since the state shown in FIG. 5, instead of performing a trigger operation while viewing the display screen 210 shown in FIG. 5. Therefore, unless a video after recording is checked, it cannot be determined whether or not the video has been actually recorded, starting from the state shown in FIG. 5.

### (3-2. Display examples according to this embodiment)

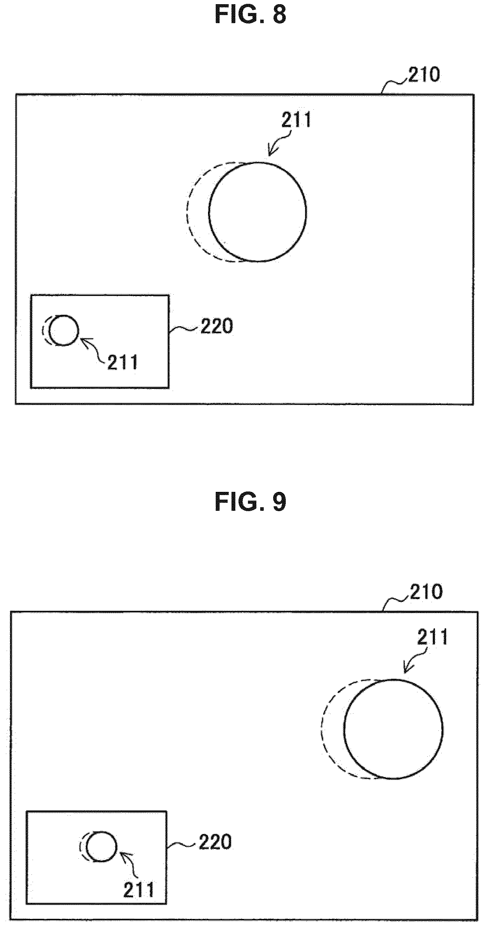

Next, display examples in the imaging apparatus 10 according to this embodiment will be described with reference to FIG. 7 to FIG. 9. FIG. 7 is a diagram showing a display example in the imaging apparatus 10 according to this embodiment at the shooting start timing shown in FIG. 3. FIG. 8 is a diagram showing a display example in the imaging apparatus 10 according to this embodiment at the recording start timing shown in FIG. 3. FIG. 9 is a diagram showing a display example in the imaging apparatus 10 according to this embodiment at the trigger signal input timing shown in FIG. 3.

FIG. 7 to FIG. 9 show displays of the display screen 210 which are provided when an object 211 similar to that shown in FIG. 4 to FIG. 6, i.e., a video of an object 211 moving from left to right, is shot. The display screen 210 corresponds to the above display screen of the display unit 130 shown in FIG. 2. Also, the display of the display screen 210 is controlled by the above display control unit 165 shown in FIG. 2.

As shown in FIG. 7 to FIG. 9, in this embodiment, in a partial region of the display screen 210, another display screen 220 having a smaller size is provided using a so-called picture-in-picture (PinP) function. In this case, the display screen 210 displays a live view image, and the other display screen 220 displays a video which is delayed for a predetermined time. The delay time may be a time corresponding to a preceding period of time in the first recording mode, and therefore, a video displayed on the other display screen 220 may be a video corresponding to a recording start timing. In the description that follows, the display screen 220 which displays a delayed video is also referred to as the delayed display screen 220 for the sake of convenience, in order to distinguish it from the display screen 210 which displays a live view image.

For example, as shown in FIG. 7, at the shooting start timing shown in FIG. 3, the display screen 210 and the delayed display screen 220 display similar images. The state shown in FIG. 7 is a state in which shooting has been just started, and a video has not yet been stored in the first storage unit 140, and therefore, a video which is delayed for a preceding period of time cannot be displayed. In this case, as shown in FIG. 7, the delayed display screen 220 may display a video which is delayed as much as possible, i.e., a video at a shooting start timing. Note that when a trigger operation is performed at, for example, a timing shown in FIG. 7, recording may be started from as early a timing as possible. Specifically, in this case, a shooting start timing coincides with a recording start timing. Thus, even in the state shown in FIG. 7, the delayed display screen 220 displays a video which is at a recording start timing.

As shown in FIG. 8, at the recording start timing shown in FIG. 3, a live view image on the display screen 210 changes from the state shown in FIG. 7, depending on an actual motion of the object 211. Meanwhile, a video on the delayed display screen 220 does not change from the state shown in FIG. 7. The state shown in FIG. 8 is a state just after the start of shooting, and neither a video with a period of time corresponding to the storage capacity of the first storage unit 140 nor a video with a preceding period of time has been stored yet in the first storage unit 140, and therefore, a video which is delayed for a preceding period of time cannot be displayed. In this case, as shown in FIG. 8, the delayed display screen 220 may display a video which is delayed as much as possible, i.e., a video at a shooting start timing, as in the state shown in FIG. 7. Note that when a trigger operation is performed at the timing shown in FIG. 8, recording may be started at as early a timing as possible, as in the state shown in FIG. 7. In other words, in this case, a shooting start timing coincides with a recording start timing. Thus, even in the state shown in FIG. 8, the delayed display screen 220 displays a video which is at a recording start timing.

As shown in FIG. 9, at the trigger signal input timing shown in FIG. 3, a live view image on the display screen 210 further changes from the state shown in FIG. 8, depending on an actual motion of the object 211. Meanwhile, the delayed display screen 220 displays a video which has been displayed as a live view image on the display screen 210 in FIG. 8, i.e., a video at a recording start timing. Thus, the state shown in FIG. 9 is a state after at least a period of time corresponding to the storage capacity of the first storage unit 140 has elapsed since the start of shooting, and therefore, a video at a recording start timing which is delayed for a time corresponding to a recording period of time (i.e., a preceding period of time) may be displayed on the delayed display screen 220.

As shown in FIG. 7 to FIG. 9, in this embodiment, the delayed display screen 220 may display a video which is at a recording start timing. In FIG. 7 to FIG. 9, the first recording mode has been described as an example. Alternatively, even in the second storing mode, a video at a recording start timing which is delayed for a time corresponding to a preceding period of time may be similarly displayed on the delayed display screen 220. Therefore, the user can perform a trigger operation while checking a video which is at a recording start timing on the delayed display screen 220, and therefore, the possibility that a video during an erroneous period of time which is different from that which is originally desired, is recorded, is reduced, whereby the convenience of the user can be improved.

### (4. Display control method)

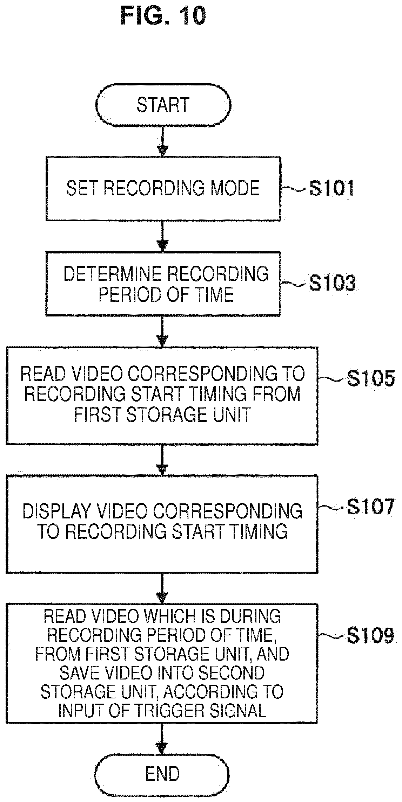

A procedure for a display control method according to this embodiment will be described with reference to FIG. 10. FIG. 10 is a flowchart showing an example of the procedure for the display control method according to this embodiment. Note that, for example, processes shown in FIG. 10 correspond to respective processes performed by the corresponding functional blocks of the imaging apparatus 10 according to this embodiment shown in FIG. 2.

Referring to FIG. 10, in the display control method according to this embodiment, initially, the recording mode is set (step S101). In a process shown in step S101, the recording mode is set to one of the first recording mode to the third recording mode described above (1. Recording modes), depending on the user's operation input. Note that, for example, the process shown in step S101 corresponds to a process performed by the recording mode setting unit 163 shown in FIG. 2.

Next, a recording period of time is determined on the basis of the set recording mode (step S103). For example, when the recording mode is the first recording mode, the recording period of time is a predetermined period of time preceding the current time. Also, for example, when the recording mode is the second recording mode, the recording period of time is a combination of a predetermined period of time preceding the current time and a predetermined period of time following the current time. Also, for example, when the recording mode is the third recording mode, the recording period of time is a predetermined period of time following the current time. Note that, for example, the process shown in step S103 corresponds to a process performed by the captured video recording unit 164 shown in FIG. 2.

Next, a video corresponding to a recording start timing is read from the first storage unit (first recording medium) on the basis of the determined recording period of time (step S105). When the recording mode is the first recording mode or the second recording mode, and the storage capacity of the first storage unit is a storage capacity corresponding to a video during a preceding period of time in each recording mode, the video corresponding to a recording start timing is a video immediately before being erased from the first storage unit. Meanwhile, when the recording mode is the third recording mode, the video corresponding to a recording start timing is a video at the current time (i.e., a live view image), and therefore, may not be read from the first storage unit. Note that, for example, the process shown in step S105 corresponds to a process performed by the captured video recording unit 164 shown in FIG. 2. Also, for example, the first storage unit corresponds to the first storage unit 140 shown in FIG. 2, and temporarily stores a video with a certain period of time.

Next, the video corresponding to a recording start timing is displayed (step S107). For example, when the recording mode is the first recording mode or the second recording mode, a video which is delayed for a predetermined time is displayed as the video corresponding to a recording start timing. Also, in this case, as shown in FIG. 7 to FIG. 9, a live view image may be displayed together with the video which is delayed for a predetermined time. Alternatively, the video which is delayed for a predetermined time may be displayed in manners described in display examples below (5. Variations of display examples). Meanwhile, when the recording mode is the third recording mode, a live view image is displayed as the video corresponding to a recording start timing. Note that, for example, the process shown in step S107 may be performed by the display control unit 165 shown in FIG. 2.

Next, a video during the recording period of time is read from the first storage unit, and is saved into the second storage unit (second recording medium), according to the input of a trigger signal (step S109). For example, when the recording mode is the first recording mode or the second recording mode, the recording period of time includes a preceding period of time. The first storage unit temporarily stores a video with a certain period of time. Therefore, by acquiring a video corresponding to a preceding period of time from the first storage unit, a video during the recording period of time depending on these recording modes (in the second recording mode, a video during a portion of the recording period of time) can be saved into the second storage unit. Meanwhile, when the recording mode is the third recording mode, the recording period of time does not include a preceding period of time, and therefore, the process of moving a video from the first storage unit to the second storage unit is not performed, and a most recent video sequentially acquired which corresponds to a live view image is saved into the second storage unit. Note that, for example, the process shown in step S109 corresponds to a process performed by the captured video recording unit 164 shown in FIG. 2. Also, for example, the second storage unit corresponds to the second storage unit 150 shown in FIG. 2, and semipermanently stores a video which is intended to be finally recorded.

In the foregoing, the procedure for the display control method according to this embodiment has been described with reference to FIG. 10.

### (5. Variations of display examples)

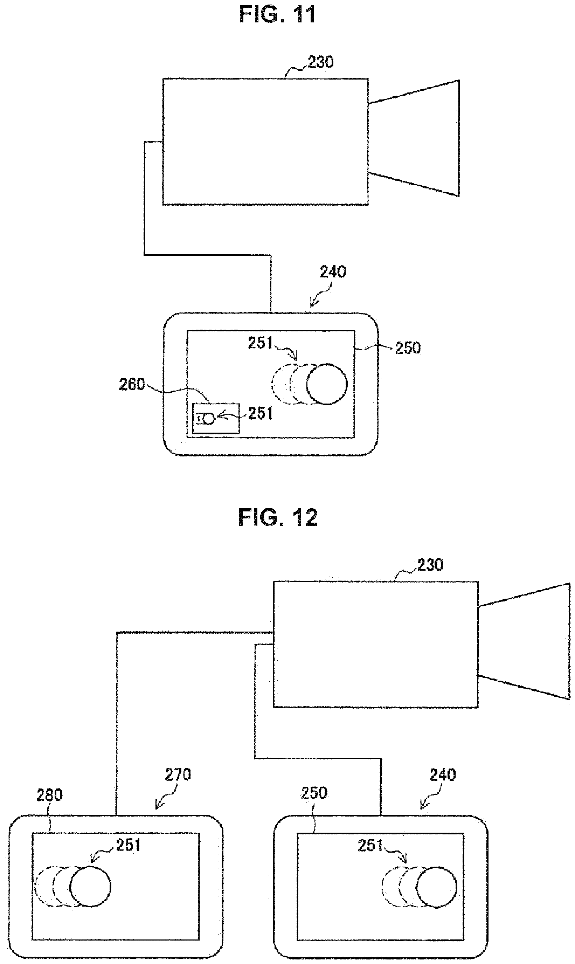

In the above embodiment, as a display example of a video which is delayed for a predetermined time, a case has been described in which, in a partial region of a display screen which displays a live view image, a delayed display screen having a smaller size which displays the video which is delayed for a predetermined time is provided. FIG. 11 is an illustrative diagram for describing a display example according to this embodiment, and showing a display example according to the above embodiment again. FIG. 11 schematically shows an imaging apparatus main body 230 and a display device 240. For example, the imaging apparatus main body 230 has functions corresponding to the imaging unit 110, the operation unit 120, the first storage unit 140, the second storage unit 150, and the control unit 160 shown in FIG. 2. Also, the display device 240 may be included in the display unit 130 shown in FIG. 2.

As in the display examples shown in FIG. 7 to FIG. 9, in the display example shown in FIG. 11 an object 251 moving from left to right is displayed on a display screen 250 of the display device 240. A video on the display screen 250 is a video showing a current state of the object 251, i.e., a live view image. Also, a delayed display screen 260 having a smaller size is provided in the display screen 250. Although the object 251 is displayed on the delayed display screen 260 as well as the display screen 250, a video on the delayed display screen 260 is a video which is delayed for a predetermined time from the current time.

However, this embodiment is not limited to this example. A video which is delayed for a predetermined time may be displayed using other methods. Here, as a variation of the display example in this embodiment, a case will be described in which a video which is delayed for a predetermined time is displayed using other methods. Note that a method of displaying a video which is delayed for a predetermined time may be selected, as appropriate, from the display methods according to the above embodiment, display methods according to variations described below, and in addition, various known display methods, taking into consideration the hardware configuration of the imaging apparatus 10, the convenience of the user, or the like.

### (5-1. Variation in which plurality of display devices are provided)

A variation in which a plurality of display devices are provided will be described with reference to FIG. 12. FIG. 12 is an illustrative diagram for describing the variation in which a plurality of display devices are provided.

Referring to FIG. 12, a plurality of display devices 240 and 270 having display screens 250 and 280 with similar sizes are provided with respect to an imaging apparatus main body 230. The imaging apparatus main body 230 is similar to the imaging apparatus main body 230 shown in FIG. 11. Also, for example, the display devices 240 and 270 are included in the display unit 130 shown in FIG. 2. Thus, in this variation, the display unit 130 may include, for example, the plurality of display devices 240 and 270 having display screens with similar sizes.

The display screen 250 of the display device 240 displays a live view image. Meanwhile, the display screen 280 of the display device 270 displays a video which is delayed for a predetermined time. Here, in the above embodiment, as shown in FIG. 11, the delayed display screen 260 is incorporated, as a display screen with a relatively small size, in the display screen 250. It is considered that the user performs a trigger operation while viewing the delayed display screen 260 instead of a live view image. Therefore, in the display example shown in FIG. 11, it may be difficult for the user to check the delayed display screen 260 which is a small screen. In this variation, the plurality of display devices 240 and 270 are provided, and a live view image and a video which is delayed for a predetermined time are displayed in similar sizes on the display devices 240 and 270, respectively, and therefore, the convenience of the user can be further improved. Note that the display screens 250 and 280 of the display devices 240 and 270 may not necessarily have similar sizes, and the sizes may be adjusted, as appropriate, as long as the user is not hindered from checking a video.

### (5-2. Variation in which only video delayed for predetermined time is displayed)

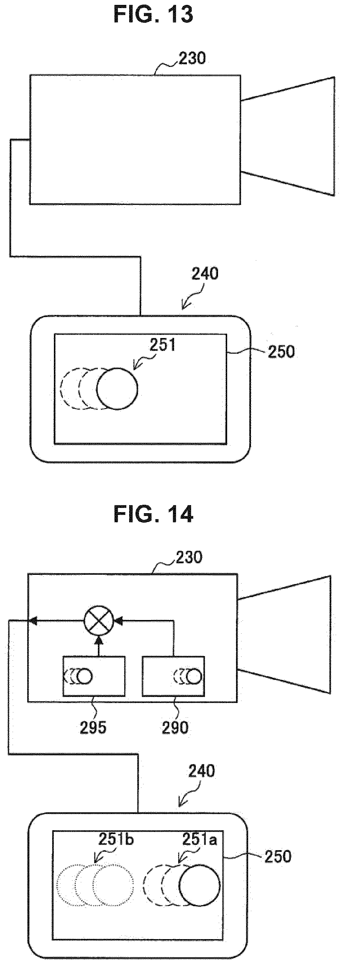

A variation in which only a video which is delayed for a predetermined time is displayed will be described with reference to FIG. 13. FIG. 13 is an illustrative diagram for describing the variation in which only a video which is delayed for predetermined time is displayed.

Referring to FIG. 13, an imaging apparatus main body 230 and a display device 240 are schematically illustrated. The imaging apparatus main body 230 and the display device 240 are similar to the imaging apparatus main body 230 and the display device 240 shown in FIG. 11. Thus, this variation may be implemented by a hardware configuration similar to that of the above embodiment shown in FIG. 11. Note that, in this variation, a video displayed by the display device 240 is different from that of the above embodiment.

In this variation, a video which is delayed for a predetermined time is displayed, instead of a live view image, on the display screen 250 of the display device 240. According to this variation, compared to the display example shown in FIG. 11, a video which is delayed for a predetermined time is displayed on the display screen 250 with a larger size. Therefore, when the user performs a trigger operation, the user can more easily check the video which is delayed for a predetermined time. Here, in this variation, a live view image is not displayed by the display device 240. However, a live view image is a video showing a current state of a object 251, and therefore, even when a live view image is not displayed on the display screen 250, the user can directly observe a state of the object 251 by their naked eye to obtain information which is substantially equivalent to that which is obtained when a live view image is viewed. Therefore, even when a live view image is not displayed as in this variation, the convenience of the user is not significantly reduced.

### (5-3. Variation in which live view image and video delayed for predetermined time are superimposed and displayed together)

In the above embodiment or the variation described above (5-1. Variation in which plurality of display devices are provided), a plurality of display screens are provided, and a live view image is displayed on one display screen, and a video which is delayed for a predetermined time is displayed on another display screen. However, this embodiment is not limited to this example, and both a live view image and a video which is delayed for a predetermined time may be displayed on a single display screen.

Such a variation in which a live view image and a video which is delayed for a predetermined time are placed and displayed on top of each other (superimposition display) will be described with reference to FIG. 14. FIG. 14 is an illustrative diagram for describing the variation in which a live view image and a video which is delayed for a predetermined time are superimposed and displayed together.

Referring to FIG. 14, an imaging apparatus main body 230 and a display device 240 are schematically illustrated. The imaging apparatus main body 230 and the display device 240 are similar to the imaging apparatus main body 230 and the display device 240 shown in FIG. 11. Thus, this variation may be implemented by a hardware configuration similar to that of the above embodiment shown in FIG. 11. Note that, in this variation, a video displayed by the display device 240 is different from that of the above embodiment.

In this variation, a live view image and a video which is delayed for a predetermined time are placed and displayed on top of each other (so-called superimposition display) on the display screen 250 of the display device 240. In the example shown, an object 251a involved with a live view image and an object 251b involved with a video which is delayed for a predetermined time are both displayed on the display screen 250 of the display device 240. At this time, a display effect which allows the user to intuitively understand that the object 251b is not an image indicating a current state of the object 251, such as transparent display or the like, may be applied to the object 251b involved with a video which is delayed for a predetermined time.

Such superimposition display may be achieved by, for example, combining a video 290 corresponding to a live view image with a video 295 which is delayed for a predetermined time. This combination process may, for example, be performed by the display control unit 165 shown in FIG. 2. Note that the display control in this variation may be performed using various known techniques used for superimposition display of a plurality of videos. For example, as described above, two videos may be superimposed together while one of them is transparent. Alternatively, two videos may be superimposed together while a difference between them is emphasized.

According to this variation, compared to the display example shown in FIG. 11, a video which is delayed for a predetermined time is displayed on the display screen 250 with a larger size, and therefore, when the user performs a trigger operation, the user can more easily check the video which is delayed for a predetermined time. Also, a live view image and a video which is delayed for a predetermined time are superimposed and displayed together on the same display screen 250, and therefore, the user can easily check both of the videos without significantly moving their line of sight, whereby the convenience of the user can be further improved.

### (6. Hardware configuration)

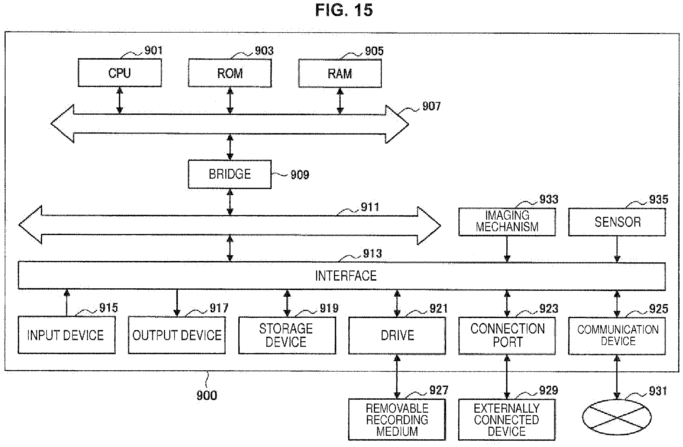

A hardware configuration of the imaging apparatus according to this embodiment will be described with reference to FIG. 15. FIG. 15 is a block diagram showing a hardware configuration example of the imaging apparatus according to this embodiment. An imaging apparatus 900 shown may provide, for example, the imaging apparatus 10 of the above embodiment.

The imaging apparatus 900 includes a central processing unit (CPU) 901, a read only memory (ROM) 903, and a random access memory (RAM) 905. In addition, the imaging apparatus 900 may include a host bus 907, a bridge 909, an external bus 911, an interface 913, an input device 915, an output device 917, a storage device 919, a drive 921, a connection port 923, a communication device 925, an imaging mechanism 933, and a sensor 935. The imaging apparatus 900 may include a processing circuit called a digital signal processor (DSP) or application specific integrated circuit (ASIC), instead of or in addition to the CPU 901.

The CPU 901 functions as a calculation processor and a controller, and controls a portion of or all operations in the imaging apparatus 900 in accordance with various programs recorded in the ROM 903, the RAM 905, the storage device 919, or a removable recording medium 927. The ROM 903 stores programs, calculation parameters, and the like which are used by the CPU 901. The RAM 905 serves as primary storage for programs which are used in execution of the CPU 901, parameters which change, as appropriate, in the execution, and the like. The CPU 901, the ROM 903, and the RAM 905 are connected to each other by the host bus 907 which includes an internal bus, such as a CPU bus or the like. In addition, the host bus 907 is connected to the external bus 911, such as a peripheral component interconnect/Interface (PCI) bus or the like, via the bridge 909. In this embodiment, for example, the CPU 901 may be included in the control unit 160 shown in FIG. 2.

The input device 915 is a device which is operated by the user, such as a mouse, keyboard, touchscreen, button, switch, lever, or the like. For example, the input device 915 may be a remote controller using infrared light or other radio waves, or may be an externally connected device 929 operable in response to the operation of the imaging apparatus 900, such as a mobile phone or the like. The input device 915 includes an input control circuit which generates an input signal on the basis of information which is input by the user, and outputs the input signal to the CPU 901. By operating the input device 915, the user can input various types of data to the imaging apparatus 900 or instruct the imaging apparatus 900 to perform a processing operation. The input device 915 may, for example, be included in the operation unit 120 shown in FIG. 2. For example, the user can input an instruction to set a recording mode or a trigger operation indicating start of recording, through the input device 915.

The output device 917 includes a device capable of visually or audibly notifying the user of acquired information. The output device 917 may, for example, be a display device, such as a liquid crystal display (LCD), plasma display panel (PDP), organic EL display, lamp, projector, light, or the like, an audio output device, such as a loudspeaker, headphone, or the like, a printer, or the like. The output device 917 may output a result obtained from the process of the imaging apparatus 900 in the form of a video, such as text, an image, or the like, and an audio, such as voice, sound, or the like. In this embodiment, the display device may, for example, be included in the display unit 130 shown in FIG. 2. The display device displays a video which is delayed for a predetermined time, under the control of the CPU 901. Also, in this embodiment, for example, the audio output device may output audio according to an application performed in a window.

The storage device 919 is a device for data storage which is configured as an example of a storage unit of the imaging apparatus 900. The storage device 919 includes, for example, a magnetic storage device, such as a hard disk drive (HDD) or the like, a semiconductor storage device, an optical storage device, a magneto-optical storage device, or the like. The storage device 919 stores programs to be executed by the CPU 901, various kinds of data, various kinds of data obtained from the outside, and the like. In this embodiment, for example, the storage device 919 may be included in the first storage unit 140 and the second storage unit 150 shown in FIG. 2. Note that the first storage unit 140 may include the above ROM 903 or RAM 905. Also, the second storage unit 150 may include a removable recording medium 927 described below. For example, the storage device 919, when functioning as the first storage unit 140, saves video information which is during a certain period of time. Also, for example, the storage device 919, when functioning as the second storage unit 150, semipermanently saves a video which is intended to be finally recorded. Also, the storage device 919 can store various kinds of information which are processed by the control unit 160.

The drive 921 is a reader/writer for the removable recording medium 927, such as a magnetic disk, optical disk, magneto-optical disk, semiconductor memory, or the like, and is internal or external to the imaging apparatus 900. The drive 921 reads information recorded in the removable recording medium 927 attached thereto, and outputs the read information to the RAM 905. Also, the drive 921 writes a record into the removable recording medium 927 attached thereto. In this embodiment, for example, the drive 921 can read and write various kinds of information which are processed by the control unit 160 shown in FIG. 2 and various process results obtained by the control unit 160 from and to the removable recording medium 927. For example, the second storage unit 150 shown in FIG. 2 may include the removable recording medium 927.

The connection port 923 is a port used to directly connect a device to the imaging apparatus 900. The connection port 923 may be a Universal Serial Bus (USB) port, IEEE1394 port, and Small Computer System Interface (SCSI) port, or the like. Alternatively, the connection port 923 may be an RS-232C port, optical audio terminal, High-Definition Multimedia Interface (HDMI) (registered trademark) port, or the like. The connection of the externally connected device 929 to the connection port 923 allows exchange of various kinds of data between the imaging apparatus 900 and the externally connected device 929. In this embodiment, for example, various kinds of information which are processed by the control unit 160 shown in FIG. 2 and various process results which are obtained by the control unit 160 may be transmitted and received to and from the externally connected device 929 via the connection port 923. For example, a video which is intended to be finally recorded and is stored the second storage unit 150 shown in FIG. 2 may be transmitted to the externally connected device 929 via the connection port 923.

The communication device 925 is, for example, a communication interface including a communication device for connection to a communication network 931, and the like. The communication device 925 may be, for example, a communication card for a wired or wireless local area network (LAN), Bluetooth (registered trademark), or wireless USB (WUSB), or the like. Alternatively, the communication device 925 may be a router for optical communication, a router for Asymmetric Digital Subscriber Line (ADSL), various modems for communication, or the like. For example, the communication device 925 transmits and receives a signal to and from the Internet or other communication devices in accordance with a predetermined protocol, such as TCP/IP or the like. In addition, the communication network 931 connected to the communication device 925 may be a network connected in a wired or wireless manner, and may be, for example, the Internet, a home LAN, infrared communication, radio wave communication, satellite communication, or the like. In this embodiment, for example, the communication device 925 may transmit and receive various kinds of information which are processed by the control unit 160 shown in FIG. 2 and various process results which are obtained by the control unit 160 to and from other external devices via the communication network 931. For example, a video which is intended to be finally recorded and is stored in the second storage unit 150 shown in FIG. 2 may be transmitted to other external devices by the communication apparatus 925 via the communication network 931.

The imaging mechanism 933 is a mechanism which generates a captured image by imaging a real space using an imaging device, such as a CCD image sensor, CMOS image sensor, or the like, and various members, such as a lense for controlling the formation of an image of an object on the image sensor, and the like. The imaging mechanism 933 may be a device which preferably captures a moving image (video). In this embodiment, for example, the imaging mechanism 933 may be included in the imaging unit 110 shown in FIG. 2.

The sensor 935 is any of various sensors, such as an acceleration sensor, gyroscopic sensor, geomagnetic sensor, optical sensor, sound sensor, ranging sensor, and the like. The sensor 935 acquires information about a state of the imaging apparatus 900 itself, such as the orientation of the housing of the imaging apparatus 900, or the like, or information about an environment around the imaging apparatus 900, such as brightness or noise around the imaging apparatus 900, or the like. The sensor 935 may also include a global positioning system (GPS) sensor which receives a GPS signal, and measures the latitude, longitude, and altitude of the apparatus. In this embodiment, various kinds of information acquired by the sensor 935 may be used to achieve various known functions of commonly used imaging apparatuses, such as a so-called camera-shake correction function, a function of automatically determining imaging conditions (exposure, shutter speed, etc.) in an auto mode, and the like.

In the foregoing, a hardware configuration example of the imaging apparatus 900 has been described. Each of the above components may be configured using general-purpose members, or alternatively, may be configured by hardware specialized in the function of each component. Such a configuration may be modified as appropriate according to the state of the art at the time of the implementation.

Note that it is also possible to develop a computer program for realizing the respective functions of the imaging apparatus 900 as discussed above, and implement the computer program in a personal computer or the like. In addition, a computer-readable recording medium storing such a computer program may also be provided. The recording medium may be a magnetic disc, an optical disc, a magneto-optical disc, or flash memory, for example. Furthermore, the above computer program may also be delivered via a network, for example, without using a recording medium.

### (7. Supplement)

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.
(1) A display control apparatus including:
   a display control unit configured to delay a captured video for a predetermined time, and display the delayed video,
   wherein the predetermined time for which the video is delayed is determined on the basis of a timing at which recording is started according to a trigger signal.
(2) The display control apparatus according to (1), further including:
   a recording mode setting unit configured to determine a recording mode corresponding to a relationship between an input timing of the trigger signal and a recording period of the video,
   wherein if the recording mode is a recording mode in which the recording period of time includes a preceding period of time before the timing of the trigger signal, the display control unit delays the video for the preceding period of time, and displays the delayed video.
(3) The display control apparatus according to (2),
   wherein the recording mode includes at least a first recording mode in which the video during a period of time preceding the timing of the trigger signal by the recording period of time is recorded, and a second recording mode in which the video during the recording period of time including periods of time preceding and following the input timing of the trigger signal.
(4) The display control apparatus according to any one of (1) to (3), further including:
   a storage unit configured to store a captured video with a certain period of time,
   wherein the display control unit displays a captured video which is delayed for a predetermined time, and displays the delayed video, using a video stored in the storage unit.
(5) The display control apparatus according to any one of (1) to (4),
   wherein the display control unit further displays a live view image showing a current state of an object together with a video which is delayed for a predetermined time.
(6) The display control apparatus according to (5),
   wherein the display control unit displays the live view image on a first display screen, and displays the video which is delayed for the predetermined time on a second display screen.
(7) The display control apparatus according to (6),
   wherein the second display screen is provided in a partial region of the first display screen.
(8) The display control apparatus according to (6),
   wherein the first display screen and the second display screen are display screens of different display devices.
(9) The display control apparatus according to (5),
   wherein the display control unit superimposes and displays the live view image and the video which is delayed for the predetermined time together.
(10) An imaging apparatus including:
   an imaging unit configured to capture a video;
   a storage unit configured to store a video with a certain period of time captured by the imaging unit; and
   a display control unit configured to delay the video captured by the imaging unit for a predetermined time, and display the delayed video, using the video stored in the storage unit,
   wherein the predetermined period of time for which the video is delayed is determined on the basis of a timing at which recording is started according to a trigger signal.
(11) A display control method including:
   causing a processor to delay a captured video for a predetermined time, and display the delayed video,
   wherein the predetermined time for which the video is delayed is determined on the basis of a timing at which recording is started according to a trigger signal.

### Reference Signs List

- 10: imaging apparatus
- 110: imaging unit
- 120: operation unit
- 130: display unit
- 140: first storage unit
- 150: second storage unit
- 160: control unit
- 161: imaging control unit
- 162: captured video processing unit
- 163: recording mode setting unit
- 164: captured video recording unit
- 165: display control unit

## Claims

1. A display control apparatus comprising:
a display control unit configured to delay a captured video for a predetermined time, and display the delayed video,
wherein the predetermined time for which the video is delayed is determined on the basis of a timing at which recording is started according to a trigger signal.

2. The display control apparatus according to claim 1, further comprising:
a recording mode setting unit configured to determine a recording mode corresponding to a relationship between an input timing of the trigger signal and a recording period of the video,
wherein if the recording mode is a recording mode in which the recording period of time includes a preceding period of time before the timing of the trigger signal, the display control unit delays the video for the preceding period of time, and displays the delayed video.

3. The display control apparatus according to claim 2,
wherein the recording mode includes at least a first recording mode in which the video during a period of time preceding the timing of the trigger signal by the recording period of time is recorded, and a second recording mode in which the video during the recording period of time including periods of time preceding and following the input timing of the trigger signal.

4. The display control apparatus according to claim 1, further comprising:
a storage unit configured to store a captured video with a certain period of time,
wherein the display control unit displays a captured video which is delayed for a predetermined time, and displays the delayed video, using a video stored in the storage unit.

5. The display control apparatus according to claim 1,
wherein the display control unit further displays a live view image showing a current state of an object together with a video which is delayed for a predetermined time.

6. The display control apparatus according to claim 5,
wherein the display control unit displays the live view image on a first display screen, and displays the video which is delayed for the predetermined time on a second display screen.

7. The display control apparatus according to claim 6,
wherein the second display screen is provided in a partial region of the first display screen.

8. The display control apparatus according to claim 6,
wherein the first display screen and the second display screen are display screens of different display devices.

9. The display control apparatus according to claim 5,
wherein the display control unit superimposes and displays the live view image and the video which is delayed for the predetermined time together.

10. An imaging apparatus comprising:
an imaging unit configured to capture a video;
a storage unit configured to store a video with a certain period of time captured by the imaging unit; and
a display control unit configured to delay the video captured by the imaging unit for a predetermined time, and display the delayed video, using the video stored in the storage unit,
wherein the predetermined period of time for which the video is delayed is determined on the basis of a timing at which recording is started according to a trigger signal.

11. A display control method comprising:
causing a processor to delay a captured video for a predetermined time, and display the delayed video,
wherein the predetermined time for which the video is delayed is determined on the basis of a timing at which recording is started according to a trigger signal.
